# EUROPEAN PATENT APPLICATION

(11) **EP 2 818 843 A1**
(43) Date of publication of application: **31.12.2014**
(21) Application number: 13250079.4
(22) Date of filing: 25.06.2013
(51) Int. Cl.: G01M 11/00, H04B 10/079, H04B 10/077, H04J 14/02

(54) **Optical network fault identification**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

An optical network terminal comprising
- an optical transceiver,
- a control unit operatively connected to the optical transceiver,
- an optical output selection unit,
- a light source operatively connected to the control unit, the light source being configured in use to output a test light via the optical output selection unit through an optical fibre coupled to the optical output selection unit.

## Description

This invention relates to methods, apparatus and systems related to the identification of faults and the like in an optical fibre telecommunications network.

With global demands for ever-greater data transmission capacities and speeds, optical fibre has been increasingly deployed in preference to copper pairs to points nearer customers in the access network. This gives rise to various "FTTx" network architectures, wherein a Fibre to the Home (FTTH) configuration in which fibre is deployed all the way to the premises from the exchange or central office, will yield the highest data transmission rates. In a FTTH layout, the Optical Network Terminal (ONT) or Optical Network Unit (ONU) (which terms are herein used interchangeably to refer to the network interface device at the customer end) is located within the customer premises. Owing however to the enormous investment needed to lay fibre all the way to each and every customer's premises, Fibre to the Kerb (FTTK) and Fibre to the Distribution point (FTTdp) and other configurations in which the ONT is located outside the customer premises in a street cabinet, at a location near the kerb such as the distribution point, and so on, are commonly adopted "next-best" architectures.

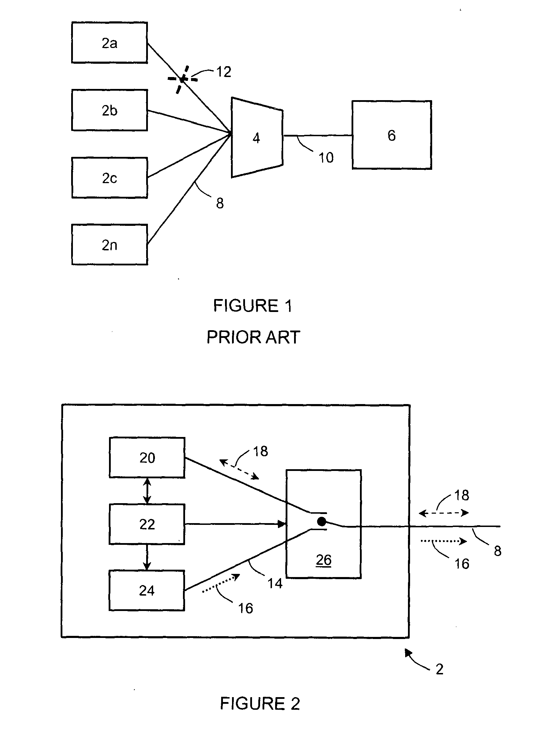

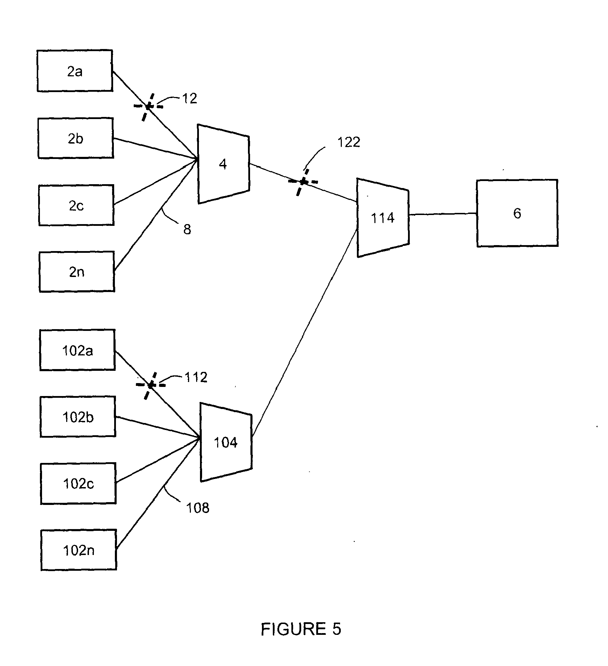

As is known, a Passive Optical Network (PON) comprises an FTTx point-to-multipoint network architecture. A schematic view of the main components making up an FTTH PON is shown in Figure 1, depicting only three of the main PON components, a number of ONTs or ONUs (2a ... 2*n*), an Optical Line Termination or Terminal apparatus (OLT) (6), and an optical splitter node (4). As is well known, the ONT typically terminates the optical local or access loop at the customer premises in a FTTH configuration, and converts optical signals outside the premises from and to electrical signals over copper to customer premises equipment (CPE) within the premises. The OLT is located at the network operator end in an exchange and is operatively connected via the optical splitter to multiple (e.g. 32) customer points. The Optical Distribution Network (ODN) can contain a single splitter as shown in Figure 1 or can consist of multiple splitters (in a cascaded design) as in Figure 5. In an FTTH set up, each ONT typically represents one end customer premises; in other FTTx configurations, the ONT can be located elsewhere, such as at the street cabinet, kerb, and so on.

The ONT contains an optical interface to receive and transmit data signals using light in the non-visible part of the radio frequency spectrum. "Downstream" data from the OLT to the ONTs is broadcast in using Time division Multiple Access (TDMA) and received by all the ONTs served by the particular OLT, and an ONT recognises data addressed to it, and filters out all other data not meant for it. ONTs are synchronised to the OLT and each are assigned time slots, allowing for data signals travelling "upstream" to the OLT to be transmitted in burst mode which are time-multiplexed with data signals from the other ONTs. The splitter is connected by a drop fibre (8) to each ONT, and to the OLT by a point to point feeder fibre link (10).

The proliferation of such FTTx networks has significantly increased the number of end user customers served by access networks comprising wholly or partly optical fibre. Optical fibres and optical fibre equipment involve different operational, test and diagnosis issues from traditional copper cables and maintaining their physical condition is critical to obtaining acceptable performance levels. Glass fibres are particularly susceptible to transmission degradation for reasons ranging from poor-quality splicing to physical breaks causing the optical signal to "leak" from the fibre. Figure 1 depicts such a break (12) in one of the links from an ONT (2a) to the splitter.

Conventionally, fault identification involves connection of a Visual Fault Locator (VFL) to the fibre to test the link for end-to-end continuity. As is known, VFLs are used for identification and location of fibre breaks, over-bending, poor splicing, faulty connections made at apparatus such as connectors or splice units, or damaged apparatus used for connections, splices and so on. In brief, they include a laser light source such as an LED which outputs a visible light into the optical fibre at one (e.g. the ONT) end for visual detection at a different part of the fibre link (e.g. at the OLT end, splitter or fibre break). A bright red visible light (having a frequency range of 400 to 750nm) is a typical choice, as being a colour which can be easily seen by the engineer located at the site of the cable break. Failure of the test light signal to "arrive" at the intended destination for detection in the expected manner can be indicative of a break or reduction in the continuity along the optical path.

As described in US 2012/0086935, a VFL can comprise a stand-alone hand held or frame-mounted device. It can also be integrated into a cellular phone having a wireless link with a computer which controls the operations of the VLF. Another example of a VLF which can be remotely controlled after connection to the fibre to be tested, is described in US 2012/023629.

In use, an engineer connects a VFL to a fibre with a connector when a fibre needs to be tested. Several issues arise from this approach. One is that an engineer has to attend to the VFL connection and testing procedure, which incurs valuable time and money, even if the test site is located within the exchange. Indeed, one or more engineers may have to make a number of journeys back and forth from the exchange to the different part of the fibre link to carry out the troubleshooting operation. Where the ONT is located within customer premises in a FTTH architecture, engineer access must be gained, which as is known is not a trivial issue owing to the difficulty of making appointments in the first place, and then late or missed appointments giving rise to perhaps-disproportionate customer unhappiness and dissatisfaction. A further issue arises from the time taken to attend to the problem, given that a job may take hours or more to be allocated to an engineer even before travel to the affected site. Yet another issue arises from the fact that the fault might lie anywhere along the connection between the OLT and the ONT via the splitter, and as the location is not always accurately known, an optimal test location might not be immediately selected, and/or more than one test procedures might have to be carried out.

While previous FTTx customers comprised enterprise and businesses in relatively small numbers, a large proportion of more recent optical fibre customers are non-commercial, residential entities. Not only are there are now considerably more optical termination points, but residential customers will be significantly more price-sensitive than commercial entities. Provisioning current and future FTTx customers requires solutions which can cope with the volume of activity involved in the operation, testing and diagnosis of such networks in a cost-efficient manner.

According to the invention there is provided an optical network terminal comprising
- an optical transceiver,
- a control unit operatively connected to the optical transceiver,
- an optical output selection unit,
- a light source operatively connected to the control unit, the light source being configured in use to output a test light via the optical output selection unit through an optical fibre coupled to the optical output selection unit.

The ONT or ONU includes within it a VFL module which "embeds" this functionality into the optical network. The test light or signal is fed through an optical output selection unit which as explained below, may take the form of a switch to direct the data and/or test light signals to various different inputs in the usual way, or a filter to screen out or combine signals of certain wavelengths. The control unit is configured to manage the usual transmission and reception of data signals to and from the OLT, as well as to initiate and carry out the fault-detection process using the test light. The test light can be at any wavelength which preferably does not interfere with that at which the data signals are being transmitted, and is detectable when it "leaks" out of the fibre through the fibre cladding or coating. Preferably however it is detected by human eyes and so is advantageously a bright red colour. The VFL test light can be activated in a number of ways: manually or automatically (e.g. upon occurrence of a pre-defined condition), locally or remotely.

Embodiments of the invention allow for troubleshooting to be carried out and problems to be solved on much shorter timescales. Advantageously, customers can be given the capacity to conduct an initial test on the line, which empowers them during a time when service is reduced or lost. Disruption at the customer premises can be significantly reduced, and network operator time and cost similarly driven down.

According to another aspect of the invention there is provided an optical network comprising one or more optical network terminals according to the invention operatively connected to an optical line terminal.

According to a further aspect of the invention there is provided a method of using an optical network terminal according to the invention comprising
- activating a light source to output a test light via an optical output selection unit through an optical fibre coupled to the optical output selection unit, and
- detecting the test light leaking from the optical fibre or from apparatus connecting the optical fibre.

After detection of the fault using embodiments of the ONT, the fault can be swiftly repaired. Even failure to detect a fault can advantageously allows the network operator to determine that either the fault is not a break or of a kind which detectable using a VFL, and/or that the fault lies elsewhere within the network.

The invention will now be described, by way of example only, with reference to the following drawings in which:
Figure 1 is a schematic depiction of an FTTx network in a PON configuration;
Figure 2 is a schematic depiction of an optical test device according to the invention;
Figure 3 is a schematic depiction of another embodiment of an optical test device according to the invention;
Figure 4 depicts the optical test device during operation; and
Figure 5 schematically depicts a cascaded splitter PON architecture.

As outlined above, when a PON of the type depicted in Figure 1 develops a fault in the form of a physical break (12) in the drop fibre cable (8) leading from the ONT (2) to the splitter (4), the conventional response of the network operator is to despatch an engineer to the customer premises to detect the problem by coupling a portable, typically hand held Visual Fault Locator (VFL) to the affected fibre. In embodiments of the invention on the other hand, the VFL functionality is embedded in the network, specifically within the ONT (2) located at the customer end or at other points within the access network.

The ONT (2) in Figure 2 depicts an optical switch implementation of an ONT, based on use of piezoelectrics or micro-electrical-mechanical (MEMs) optical components. In the usual way, ONT/ONU optics (20) send and receive optical signals (18) in the usual way via an internal ONT optical switch (26) which can be coupled to e.g. a standard single mode fibre (having a 8 to 9µm diameter core) (8) which leads to the OLT (6) via the splitter (4). In this example, the single mode fibre (8) leading out from the ONT is the one requiring testing.

Within the ONT housing, the ONT optics unit (20) is operatively connected to an ONT controller (22) which again is conventional. Typical functions of the control unit (22) include setting up the operational parameter of the ONT, communication state management in accordance with instructions from an OLT, and the like. In embodiments of the invention, the controller is further operatively connected to a test light source (24). The test light source can take the same form as that in conventional VFLs, i.e. comprising a laser-powered unit in the form of an LED or a Vertical External Cavity Surface Emitting Laser (VECSEL). It is expected that a 1mW light source can generate a test light capable of propagating over a distance of up to 5km. The light source is capable of outputting a test light signal (16) which can take the form of a continuous wave mode, or in pulses (e.g. 2 Hz) to improve ease of visual detection. The test light is preferably red in colour of a frequency within the range of 620 to 750nm, most preferably 650nm as this option is readily available using off the shelf components. As previously noted, a bright red light is easily detectable by the human naked eye. The skilled person would appreciate that other visible colours can be used, e.g. green light at about 530nm. Light invisible to the human eye (i.e. outside the wavelength frequency of 400nm to 700nm) can also be used with the deployment of a suitable detector e.g. by coupling it to the fibre at the location along the fibre where a break is suspected.

In use, operation of the test light signal is controlled by the existing ONT controlling module (22), and can be switched on by the user pressing a button or by logging into the ONT, or by issuing a command to the ONT controller remotely. The activating party can be an engineer located at the exchange or at the PON switch, or the OLT transmitting an instruction over the network, or the customer himself while within the premises. The fault detection light signal can be tuned on manually, or be arranged to be automatically activated e.g. upon receipt at the control unit (22) of a Loss of Sync or Loss of Signal (LOS) message or the like, resulting from e.g. a break in the fibre link.

In an exemplary scenario, a customer suffering a reduction or loss of service alerts the network operator, who can guide the customer through a self-diagnosis process involving switching on the VFL function on the ONT located the customer's premises. More experienced or confident customers might not need guidance from the network operator, but carry out this form of troubleshooting on their own initiative whenever service levels are affected. Once the embedded VFL functionality is activated, any data transmission via the transceiver (20) ceases, and the test light is transmitted via the ONT switch (26) through the affected fibre towards the OLT. If a test light leak can be seen (where visible light is used) from the fibre cladding, the customer can then report the fact to the network operator. Fault repair and other activity can then be carried out or scheduled for a later time. If the customer cannot see or otherwise detect the fault, an OTDR can be deployed to help locate the fault which might be situated outside the premises e.g. at the splitter node.

This first self-diagnostic step helps to identify or confirm the nature of the fault by determining if it is due to a break or some other cause within the premises detectable by the embedded VFL, without need for an engineer to be despatched to the premises for the job, with the cost and time delay that would entail. Failure to detect the fault using these methods may also help eliminate physical breaks and the like (detectable by VFLs) from a list of likely causes of the reduction or cessation of service to the customer. This allows the test and diagnosis process to swiftly move to investigate other possible causes of the problem, and may significantly shorten the time needed to resume full service to the customer.

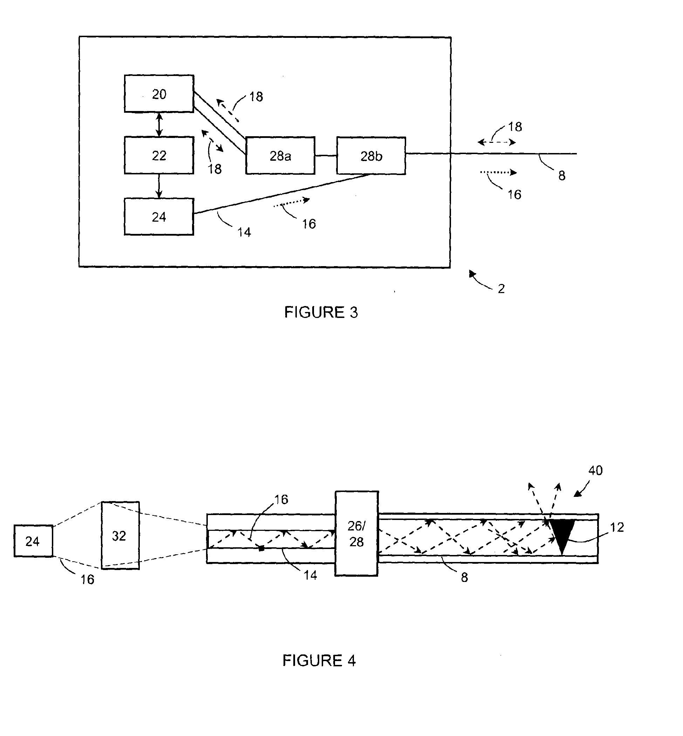

Figure 3 schematically depicts the components of another embodiment of a fault testing unit and method according to the invention. Again, the VFL functionality is embedded within an ONT which includes the usual ONT components as in the earlier-discussed embodiment shown in Figure 2, i.e. an ONT optics transceiver module (20), a control unit (22) and a test light source (24). This embodiment of the ONT includes a Wavelength Division Multiplex (WDM) filter (28) in place of an optical switch (26, Figure 2) (such as those (model no. WD202A) manufactured by Thorlabs Inc. of Newton, New Jersey, USA) to perform the task of separating out (and combining) PON wavelengths. In a preferred embodiment, two WDM filters (28a, 28b) are used in the way depicted in Figure 3, allowing for testing using the visible light source to be carried out at the same time PON data is being transmitted from the transceiver to the OLT, in contrast with the embodiment of the Figure 2. Specifically, data signals (18) are transmitted to and from the first filter (28a) and the test light wavelength (16) transmitted to the second WDM filter (28b). This arrangement allows for the PON data signals and the test light to be combined and onwardly transmitted to the single fibre (8) leading out from the ONT which requires testing.

Figure 4 depicts the operation of the test module and functionality of embodiments of the ONT. Preferably, as much of the visible test light as possible should fill the core and cladding of the fibre (8) being tested. For this purpose, a preferred implementation is to focus the divergent light (16) output by the light source (24) using e.g. a collimating or ball lens (32) into the fibre. Preferably, the fibre carrying the test light within the ONT has a core diameter smaller than the 8 to 9µm core diameter fibre (8) being tested. Coupling the visible test light into a 4µm-core fibre (14) for example, will allow the test light to maintain a Gaussian profile and single mode (650nm) in profile. The test light can be coupled to the larger-core fibre (8) being tested using an optical splitter (26 in the ONT embodiment of Figure 2, in which a MEMs switch would directly redirect the light to the 9µm fibre using mirrors) or a WDM filter (28 of the ONT embodiment of Figure 3, wherein the light is introduced into the 9µm fibre by the fusing of the fibre together). The red test light travelling in the larger 9µm core will then propagate in multi-mode (typically 9 modes in a 9µm core fibre) in which each mode takes a different path. Upon encountering a fault such as a physical break (12) in the fibre, the propagation of the light is disrupted so that it scatters and exits or leaks out of the fibre (40). Where visible light is used, this can be seen by the engineer, the customer, or other party. As noted above, this allows a customer can carry out at least part of the test procedure, or be guided by an engineer to identify problems with e.g. faulty in-house fibre cabling.

In practice, ODNs tend to comprise complex sub-network architectures of the type shown in Figure 5 comprising a cascaded splitter design. As may be expected, identification and location of faults (12) in such set ups is considerably more complicated, and using an embedded VFL would advantageously allow for quicker and less-disruptive troubleshooting activities to be carried out.

Another advantage of using the testing apparatus and methods described herein accrues to an engineer working on the PON. A particular ONU's visible light source could be turned on to allow an engineer to quickly identify the leg of the splitter on which it is entering and if any breaks are visible. This would allow incorrect routing to be identified and rectified, potentially before any loss in service is noticed by customers. This can be carried out by turning the light source on by a dispatcher to indicate to the engineer which leg to work on.

The skilled person would recognise that a number of variations and alternatives based on the invention are possible to the devices, apparatus, methods, manufacturing methods and materials used. It is possible also to envisage other purposes, aims and environments to which these devices, methods and the like, may be applied. Accordingly, this invention is not limited to the particular set up and applications described herein. In particular, the skilled person would appreciate that the apparatus and methods described herein can be deployed to useful effect in all networks deploying optical fibre in whole or in part, and is not restricted to implementation in PONs, but may be used in active optical networks and other network architectures, and point to point links, and so on. Also, the VFL functionality can be embedded within any part of the network, e.g. at any location where the ONT is located, at the splitter node, or within CPE which is optically linked to the ONT and beyond.

## Claims

1. An optical network terminal comprising
- an optical transceiver,
- a control unit operatively connected to the optical transceiver,
- an optical output selection unit,
- a light source operatively connected to the control unit, the light source being configured in use to output a test light via the optical output selection unit through an optical fibre coupled to the optical output selection unit.

2. An optical network terminal according to claim 1 wherein the optical output selection unit comprises an optical switch.

3. An optical network terminal according to claim 1 wherein the optical output selection unit comprises at least one WDM filter.

4. An optical network terminal according to claim 3 wherein the optical output selection unit comprises a first WDM filter operatively connected to the optical transceiver, and a second WDM filter operatively connected to the light source.

5. An optical network terminal according to claim 3 wherein the first WDM filter is operatively connected to the optical transceiver using an optical fibre having a smaller core diameter than an optical fibre operatively connecting the second WDM filter to the light source.

6. An optical network terminal according to any preceding claim wherein the light source is configured to output a visible test light of a frequency within a range of 620nm to 750nm.

7. An optical network terminal according to any preceding claim wherein the light source is configured to output a pulsed test light.

8. An optical network terminal according to any preceding claim wherein in use the light source is activated remotely by a signal received through the optical fibre.

9. An optical network terminal according to any preceding claim wherein in use the light source is activated automatically upon the receipt of a loss of signal message at the optical network terminal.

10. An optical network terminal according to any preceding claim wherein the light source includes a focusing component to focus the test light output by the light source within the optical fibre.

11. An optical network comprising one or more optical network terminals according to the invention operatively connected to an optical line terminal.

12. A method of using an optical network terminal according to any one of claims 1 to 11 comprising
- activating a light source to output a test light via an optical output selection unit through an optical fibre coupled to the optical output selection unit, and
- detecting the test light leaking from the optical fibre or from apparatus connecting the optical fibre.
